(19) Europäisches Patentamt
European Patent Office
Office européen des brevets

(11) EP 3 104 634 A1

(12) **EUROPEAN PATENT APPLICATION**
published in accordance with Art. 153(4) EPC

(43) Date of publication:
**14.12.2016 Bulletin 2016/50**

(21) Application number: **15745765.6**

(22) Date of filing: **28.01.2015**

(51) Int Cl.:
*H04W 8/26* (2009.01)     *H04W 16/32* (2009.01)
*H04W 72/04* (2009.01)

(86) International application number:
**PCT/JP2015/052287**

(87) International publication number:
**WO 2015/119005 (13.08.2015 Gazette 2015/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:  **04.02.2014   JP 2014019325**

(71) Applicant: **NTT Docomo, Inc.
Tokyo 100-6150 (JP)**

(72) Inventors:
• **KISHIYAMA, Yoshihisa
  Tokyo 100-6150 (JP)**
• **HARADA, Hiroki
  Tokyo 100-6150 (JP)**
• **NAGATA, Satoshi
  Tokyo 100-6150 (JP)**

(74) Representative: **Hoffmann Eitle
Patent- und Rechtsanwälte PartmbB
Arabellastraße 30
81925 München (DE)**

(54) **USER TERMINAL, WIRELESS BASE STATION, AND WIRELESS COMMUNICATION METHOD**

(57)     The present invention is designed to prevent the decrease of overall system performance in a radio communications system in which small cells to use unlicensed bands are arranged. In a radio communications system in which a small cell that uses an unlicensed band is arranged to geographically overlap a macro cell that uses a licensed band, a user terminal (20) according to an embodiment of the present invention has an identity acquiring section (211) that acquires an identity that is formed based on a first identity, which is a predetermined sequence used to specify cells, and a second identity, by using a downlink signal transmitted from one of a macro base station (11) that forms the macro cell and a small base station (12) that forms the small cell, a generating section (213) that generates an uplink signal using the identity, and a transmission section (203) that transmits the uplink signal to the small base station.

FIG.4

EP 3 104 634 A1

**Description**

Technical Field

The present invention relates to a user terminal, a radio base station and a radio communication method in a next-generation mobile communications system.

Background Art

In LTE (Long Term Evolution) and successor systems of LTE (referred to as, for example, LTE-A (LTE-Advanced), FRA (Future Radio Access), 4G, etc.), a radio communications system (referred to as, for example, "HetNet" (Heterogeneous Network)) to place small cells (including pico cells, femto cells and so on) that each have a relatively small coverage of a radius of approximately several meters to several tens of meters, to overlap macro cells each having a relatively large coverage of a radius of approximately several hundred meters to several kilometers, is under study (see, for example, non-patent literature 1).

According to this radio communications system, traffic offloading, which refers to scattering the load of communication in macro cells over small cells, becomes possible, which results in increased system capacity. Regarding the structures, a scenario to use the same frequency band in both macro cells and small cells (also referred to as, for example, "co-channel") and a scenario to use different frequency bands between macro cells and small cells (also referred to as, for example, "separate frequencies") are under study.

Furthermore, LTE-U (LTE-Unlicensed) to use unlicensed bands that require no license in LTE as frequency bands for small cells is under study. In unlicensed bands, a plurality of mobile communications providers (hereinafter simply referred to as "communications providers," "operators" and so on) may provide services, and, furthermore, systems that are arranged in an autonomous-distributed manner (that is, on a stand-alone basis) may exist.

Citation List

Non-Patent Literature

Non-Patent Literature 1: 3GPP TR 36.814 "Evolved Universal Terrestrial Radio Access (E-UTRA); Further Advancements for E-UTRA Physical Layer Aspects"

Summary of Invention

Technical Problem

Now, in LTE and successor systems of LTE, cell identities (cell IDs) to vary on a per cell basis and/or terminal-specific identities (USIDs: UE-Specific Identities) to vary on a per user terminal basis are assigned, and signals (for example, physical channel-based transmitting signals, reference signals and so on) are generated using these identities. Consequently, interference between cells can be randomized (inter-cell interference randomization).

However, in a radio communications system in which small cells to use unlicensed bands are arranged, cases might occur where the identities to assign to the small cells collide between a plurality of communications providers. In this case, it is not possible to randomize interference between the small cells, which gives a threat of causing a decrease of overall system performance.

The present invention has been made in view of the above, and it is therefore an object of the present invention to provide a user terminal, a radio base station and a radio communication method that can prevent the decrease of overall system performance when uplink/downlink signals in small cells are generated using predetermined identities in a radio communications system in which small cells to use unlicensed bands are arranged.

Solution to Problem

A user terminal according to an embodiment of the present invention provides a user terminal that, in a radio communications system in which a small cell that uses an unlicensed band is arranged to geographically overlap a macro cell that uses a licensed band, communicates in the macro cell and the small cell, and this user terminal has an identity acquiring section that acquires an identity that is formed based on a first identity, which is a predetermined sequence used to specify cells, and a second identity, by using a downlink signal transmitted from one of a macro base station that forms the macro cell and a small base station that forms the small cell, a generating section that generates an uplink signal using the identity, and a transmission section that transmits the uplink signal to the small base station.

Advantageous Effects of Invention

According to the present invention, in a radio communications system in which small cells to use unlicensed bands are arranged, it is possible to prevent the decrease of overall system performance.

Brief Description of Drawings

FIG. 1 is a conceptual diagram of a radio communications system in which small cells are placed to overlap a macro cell;
FIGs. 2 provide diagrams to explain three modes of use of unlicensed bands;
FIG. 3 is a diagram to show an example of a radio communications system in which a plurality of communications providers or stand-alone small cells are formed in an unlicensed band;
FIG. 4 is a diagram to explain identities (IDs) according to an example 1 of the present embodiment;
FIG. 5 is a diagram to show an example of assignment of second identities (2nd IDs) according to example 1 of the present embodiment;
FIGs. 6 provide diagrams to show example structures of identities (IDs) according to example 1 of the present embodiment;
FIGs. 7 provide diagrams to show examples of radio resources where discovery signals are allocated, according to an example 2 of the present embodiment;
FIG. 8 is a diagram to show an example of a schematic structure of a radio communications system according to the present embodiment;
FIG. 9 is a diagram to show an example of an overall structure of a radio base station according to the present embodiment;
FIG. 10 is a diagram to explain show an example of an overall structure of a user terminal according to the present embodiment;
FIG. 11 is a diagram to show an example of a functional structure of a macro base station according to the present embodiment;
FIG. 12 is a diagram to show an example of a functional structure of a small base station according to the present embodiment; and
FIG. 13 is a diagram to show an example of a functional structure of a user terminal according to the present embodiment.

Description of Embodiments

Now, an embodiment of the present invention will be described below in detail with reference to the accompanying drawings.

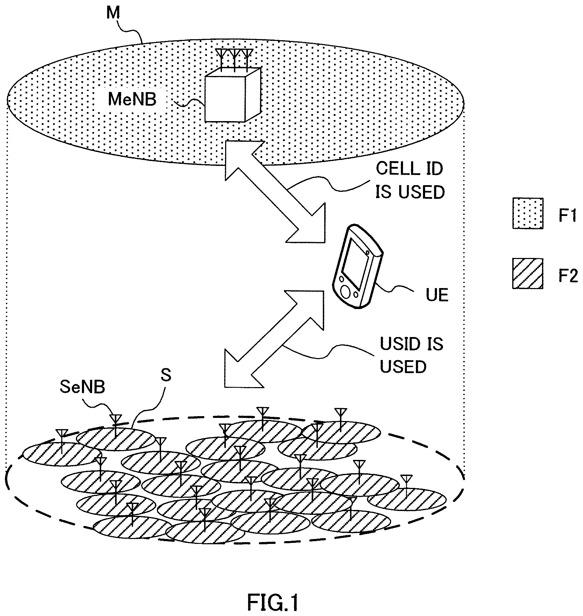

FIG. 1 is a conceptual diagram of a radio communications system in which small cells are arranged to overlap a macro cell. Referring to the radio communications system shown in FIG. 1, a macro cell M, which uses a relatively low frequency (carrier) F1 such as, for example, 2 GHz, 800 MHz and so on, and small cells S, which use a relatively high frequency (carrier) F2 such as for example, 3.5 GHz, 10 GHz and so on, are arranged to overlap each other geographically (separate frequency). Note that the frequency bands available for use in each cell are not limited to these, and, for example, F1 may be higher than F2. Also, the small cells may be referred to as "phantom cells," "micro cells," "pico cells," "femto cells" and so on.

Also, the radio communications system shown in FIG. 1 is comprised of a radio base station MeNB that forms a macro cell M (hereinafter referred to as a "macro base station"), radio base stations SeNB that form small cells S (hereinafter referred to as "small base stations"), and a user terminal UE that communicates with the macro base station MeNB and the small base stations SeNB. Note that the macro base station MeNB may be referred to as a "transmission point," an "eNodeB" (eNB) and so on. Also, the small base stations SeNB may be referred to as "transmission points," "eNodeBs" (eNBs), "home eNodeBs" (HeNBs), "RRHs" (Remote Radio Heads), "pico base stations," "femto base stations," and so on.

The macro base station MeNB and the small base stations SeNB may be connected via a relatively low-speed channel (with medium delay) such as the X2 interface (non-ideal backhaul), or may be connected via a relatively high-speed channel (with low delay) such as optical fiber (ideal backhaul). Also, the small base stations SeNB may be connected via either a non-ideal backhaul or an ideal backhaul.

Referring to the radio communications system shown in FIG. 1, a scenario to apply carrier aggregation (CA) or dual connectivity (DC), and execute communication by using a plurality of radio resources of the macro cell M and/or the small cells S at the same time may be possible.

Here, carrier aggregation (CA) refers to bundling of a plurality of component carriers (also referred to as "CCs," "carriers," "cells" and so on) to provide a wider band. Each CC has a bandwidth of maximum 20 MHz, and, for example, when maximum five CCs are bundled, a wide band of maximum 100 MHz is achieved. When CA is applied, scheduling of a plurality of CCs is controlled with one scheduler (for example, the scheduler provided in the macro base station MeNB). Given this, carrier aggregation may be referred to as "intra-base station CA" (intra-eNB CA).

Also, dual connectivity (DC) is similar to CA in bundling a plurality of CCs to provide a wide band. When DC is applied, a plurality of schedulers are provided individually, and these multiple schedulers each controls scheduling of one or more CCs under its management. Given this, DC may be referred to as "inter-base station CA" (inter-eNB CA).

Note that, when CA or DC is applied, CCs of the macro cell M may be referred to as "primary CCs" (PCCs), "primary cells" (PCells) and so on. Note that CCs of the small cells S may be referred to as "secondary CCs" (SCCs), "secondary cells" (SCells) and so on.

Now, regarding LTE systems, there is an ongoing discussion to use unlicensed bands that require no license. Such systems may be referred to as "LTE-U" (LTE-Unlicensed) systems. In unlicensed bands, a plurality of operators may provide services, and, furthermore, systems that are arranged in an autonomous-distributed manner (on a stand-alone basis) may exist.

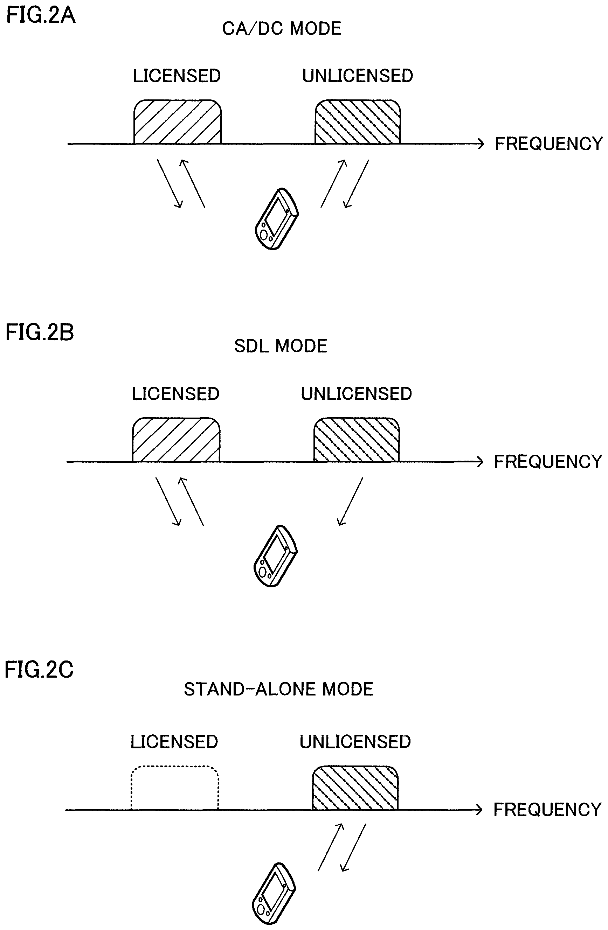

FIGs. 2 show three modes of use of unlicensed bands. To be more specific, FIG. 2A shows CA (Carrier Aggregation)/DC (Dual Connectivity) mode, FIG. 2B shows SDL (Supplemental DownLink) mode, and FIG. 2C shows stand-alone mode. There is a possibility that an unlicensed band is used as a secondary cell (SCC) in CA/DC mode and in SDL mode. Meanwhile, although, for example, a macro cell can be used as a licensed band, a small cell may be used as well. Note that, as an uplink channel for unlicensed bands, there is a possibility that the EPUSCH (Enhanced PUSCH), which use OFDMA as the radio access scheme, is used, instead of the PUSCH, which uses SC-FDMA (Single Carrier Frequency Division Multiple Access) as the radio access scheme.

Now, in LTE Release 10 (LTE Rel. 10), cell IDs (cell identities) that vary on a per cell basis are assigned, and signals (for example, physical channel-based transmitting signals, reference signals, etc.) are generated using these cell IDs. Consequently, interference between cells can be randomized (inter-cell interference randomization). Here, the cell IDs are 504 different sequences and assigned to cells on a fixed basis. The cell IDs may be referred to as "PCIs" (Physical Cell Identities) and so on.

When cell IDs are assigned to every small cell in addition to macro cells, there is a threat that the cell IDs collide between small cells and interference between small cells cannot be randomized. To be more specific, since cell IDs are assigned to small cells on a fixed basis, if cell planning fails, cell IDs may keep colliding between neighboring small cells. Since there are only 504 cell IDs, cell planning becomes complex if the number of small cells is large.

So, in LTE Release 11 (LTE Rel. 11), as shown in FIG. 1, while cell IDs are used in communication in macro cells M, terminal-specific identities (USIDs: UE-Specific Identities) are used in communication in small cells S. Here, the USIDs are user terminal-specific sequences, and also referred to as "virtual IDs" (Virtual IDentities). By using USIDs, it is possible to reduce the rate of collisions of identities compared to the case of using cell IDs.

The USIDs vary on a per user terminal basis, and therefore can reduce the rate of collisions of USIDs between neighboring small cells S. Consequently, when USIDs are used in communication in small cells S, cell planning of small cells S can be made simple.

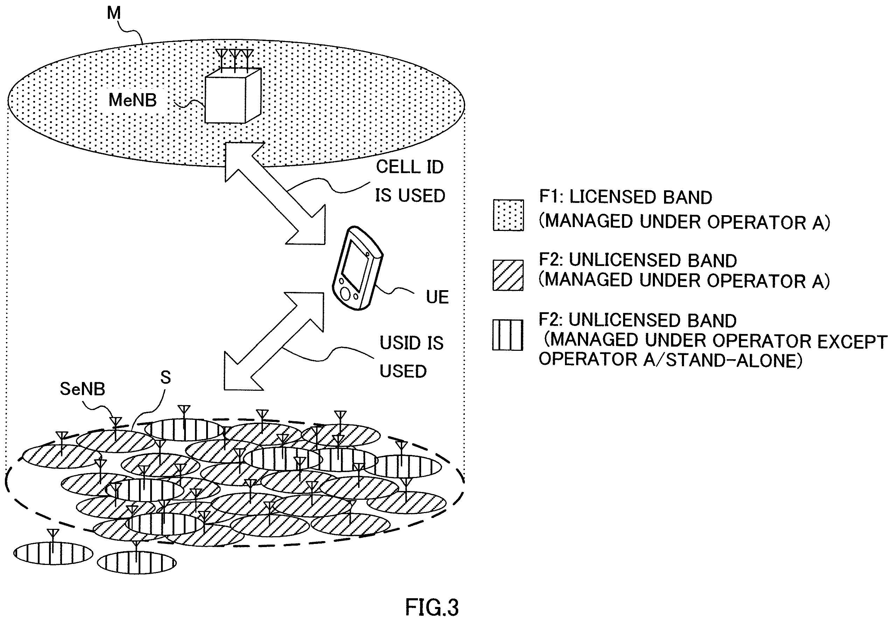

However, as shown in FIG. 3, if a plurality of operators or stand-alone small cells S are formed in an unlicensed band and each operator assigns USIDs to small cells S individually, this might result in a heightened likelihood of collisions of USIDs between operators. In this case, interference between the small cells cannot be randomized, which gives a threat of causing a decrease of overall system performance.

Furthermore, from the perspective of user terminals, when a non-subscribing operator's small cell is detected, this has to be followed complex processes, which risks increased power consumption. For example, the user terminal UE shown in FIG. 3 is subscribed to be able to communicate with an operator A alone, and, if this user terminal UE detects small cell detection signals that are transmitted from small cells managed under operators except operator A and stand-alone small cells, the user terminal UE has to perform unnecessary connection processes with these cells, risking a decrease of overall system performance.

So, the present inventors have worked on a radio communication method that can prevent the decrease of overall system performance when uplink /downlink signals in small cells are generated using predetermined identities in a radio communications system in which small cells to use unlicensed bands are arranged, and arrived at the present invention.

Now, a radio communication method according to an embodiment of the present invention (hereinafter referred to as the "present embodiment") will be described in detail below. With the radio communication method according to the present embodiment, small base stations generate (which includes scrambling, mapping, etc.) downlink signals by using identities (hereinafter also referred to simply as "IDs") that are comprised of first identities (hereinafter also referred to simply as "1st IDs") and second identities (hereinafter also referred to simply as "2nd IDs"), and transmit these downlink signals to user terminals. Also, the user terminals carry out downlink signal receiving processes (including descrambling, demapping, etc.) by using the above IDs. Also, the same holds with the generation and reception of uplink signals and so on.

Here, the downlink signals include physical downlink channel-based transmitting signals and downlink reference signals. The physical downlink channels may be, for example, the above-mentioned PDSCH and EPDCCH, but are by no means limited to these. Also, the downlink reference signals include, for example, user terminal cell-specific reference signals that are associated with the PDSCH (also referred to as "UE-specific reference signals," "DM-RSs" (DeModulation-Reference Signals), etc.), DM-RSs (DeModulation Reference Signals) and channel state measurement reference signals (CSI-RSs (Channel State Information-Reference Signals)) that are associated with the EPDCCH, and small cell detection signals (also referred to as "DSs" (Discovery Signals)), but are by no means limited to these.

Note that the discovery signals have only to be signals that can be used to detect small cells (detection signals that are required in cell search), and can be signals that are used in existing LTE systems such as synchronization signals (PSS (Primary Synchronization Signal)/SSS (Secondary Synchronization Signal)) and CRSs (Cell-specific Reference Signals), or may be signals of new structures stipulated for LTE-U.

Also, the uplink signals include physical uplink channel-based transmitting signals and uplink reference signals. The physical uplink channels may be, for example, the PUSCH (Physical Uplink Shared Channel), the PUCCH (Physical Uplink Control Channel), the PRACH (Physical Random Access Channel) and so on, but are by no means limited to these. Also, the uplink reference signals are, for example, "DM-RSs" (DeModulation-Reference Signals) for the PUSCH or the PUCCH, channel quality measurement reference signals (SRSs (Sounding Reference Signals)) and so on, but are by no means limited to these.

(Example 1)

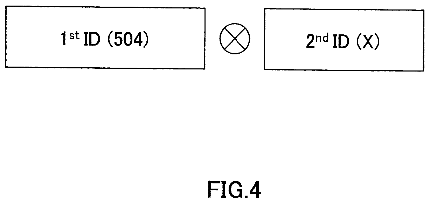

The radio communication method according to an example 1 of the present embodiment will be described with reference to FIGs. 4 to FIGs. 6. With the radio communication method according to example 1, downlink/uplink signals are generated using IDs that are formed based on 1 st IDs and 2nd IDs.

FIG. 4 is a diagram to explain identities (IDs) for use in the radio communication method according to example 1. As shown in FIG. 4, the IDs are formed based on 1 st IDs and 2nd IDs.

The 1st IDs are predetermined sequences that are used to specify cells. For example, physical cell IDs stipulated in LTE systems (cell IDs in LTE Rel. 10) can be used as 1st IDs. Also, the 1st IDs are preferably user terminal-specific sequences, and, for example, terminal-specific identities stipulated in LTE systems (USIDs in LTE Rel. 11) can be used. Also, although the 1st IDs will be provided in 504 sequences below, this is by no means limiting.

Meanwhile, the 2nd IDs are provided in X sequences (where X is a predetermined number). X may be a number to fulfill one of X<504, X=504 and X>504.

As shown in FIG. 4, the IDs that are used to generate downlink/uplink signals are formed by double-spreading 1st IDs and 2nd IDs (for example, by way of multiplication). By this means, the number of ID sequences can be increased to 504X, so that, compared to the case of using 1 st IDs alone, it is possible to reduce the rate of collisions of IDs.

Note that the manipulation method for the above double spreading is not limited to multiplication. Addition and/or others may be used as long as the number of ID sequences formed by the manipulation using 1st IDs and 2nd IDs can be made greater than 504, which is the number of cell ID/USID sequences in existing LTE systems (LTE Rel. 10/11). Also, predetermined parameters other than the 1st IDs and 2nd IDs may be used for the manipulation.

Note that the 2nd IDs are preferably structured so that IDs do not collide between operators. For example, the 2nd IDs preferably vary (have different values) per mobile communications provider (operator) that manages small cells. To increase the number of IDs per operator, a structure may be employed here in which operators use 2nd IDs that are selected from a plurality of candidates of 2nd IDs. For example, a structure may be employed in which, where X sequences constitute 2nd IDs, a number of 2nd IDs, determined per operator, can be used. In this case, it is possible to orthogonalized the IDs between operators, and reduce the rate of collisions of IDs more adequately.

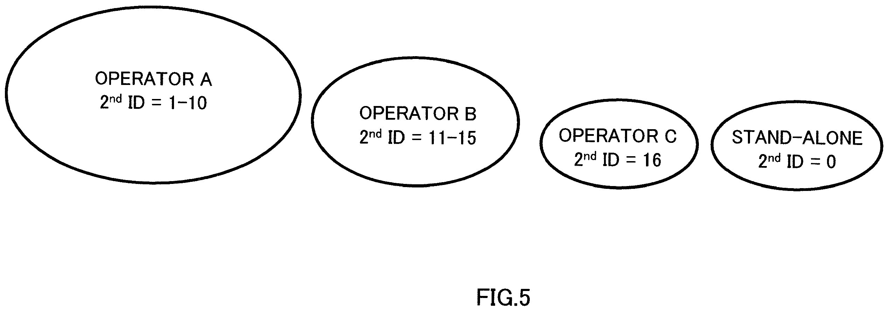

FIG. 5 is a diagram to explain an example of assignment of second identities (2nd IDs) according to example 1 of the present embodiment. In FIG. 5, an operator A can use ten 2nd IDs (1 to 10), an operator B can use five 2nd IDs (11 to 15), an operator C can use one 2nd ID (16) and stand-alone cells can use one 2nd ID (0). Consequently, operator A can configure IDs in a greater number of user terminals.

Note that, for stand-alone cells, reporting 2nd IDs is likely to be difficult because there are no additional macro cells and/or the like that can be used. Consequently, the stand-alone cells (or cells where no 2nd ID is reported) may maintain backward compatibility by making the 2nd ID a predetermined value (in FIG. 5, 2nd ID=0) that is shared in common by each operator to match with LTE Rel. 11 USIDs. This can be realized by calculating IDs using, for example, following equation 1:

$$ID = 1\text{st IDs} + 2\text{nd IDs} \times \text{the number of 1st IDs (504)} \dots \text{(Equation 1)}$$

Also, a structure may be employed in which the number of 2nd IDs which an operator uses and/or the content of 2nd IDs may be switched semi-statically or dynamically. For example, a structure may be employed here in which a macro base station and/or a higher station apparatus monitors the number of user terminals connected to small cells and reports the 2nd IDs that can be assigned, to the small base station, as appropriate.

(Grouping of 2nd IDs) The 1st IDs may be applied independently between channels/signals. Meanwhile, 2nd IDs that are to be shared in common may be applied to channels/signals, or 2nd IDs that are to be shared in common may be applied in group units (for example, grouping based on the downlink/uplink).

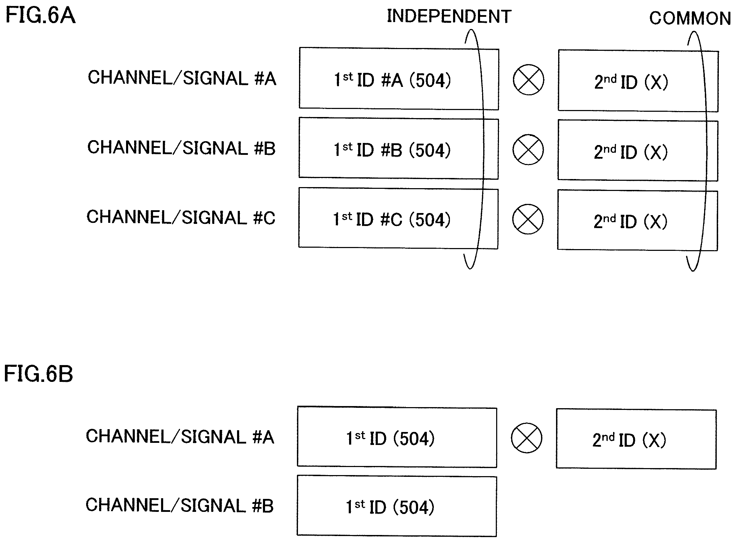

FIGs. 6 provide diagrams to show example structures of identities (IDs) according to example 1 of the present embodiment. In FIG. 6A, assume that channel/signal #A is a downlink signal (for example, an EPDCCH-based transmitting signal), channel/signal #B is another downlink signal (for example, the CSI-RS), and channel/signal #C is an uplink signal (for example, the DM-RS). In this case, 1st IDs #A, #B and #C are selected out of 504 1st IDs, and applied to a plurality of (different) channels/signals #A, #B and #C, respectively. Meanwhile, a common (the same) 2nd ID is selected out of X 2nd IDs and applied to a plurality of (different) channels/signals #A, #B and #C.

Note that, when 2nd IDs that are to be shared in common are applied per group (here, grouping is carried out between the downlink and the uplink), a common 2nd ID may be applied to channels/signals #A and #B, which are downlink signals, and a 2nd ID that is different from that of channels/signals #A and #B may be applied to channel/signal #C, which is an uplink signal.

Also, it is equally possible to employ a structure to apply 2nd IDs only to part of the channels/signals, not all channels/signals. FIG. 6 B assumes that channel/signal #A is a downlink signal (for example, a detection signal (discovery signal) that is required in cell search), and channel/signal #B is another signal. In this case, mutually different 1st IDs #A and #B are selected, out of 504 1 st IDs, and applied to a plurality of (different) channel/signals #A and #B. Meanwhile, for channel/signal #A, a 2nd ID is selected and applied out of X 2nd IDs, but no 2nd ID is applied to channel/signal #B.

(Example of Reporting of 1st IDs and 2nd IDs)

Now, an example of reporting of the 1st IDs and 2nd IDs for use in the radio communication method according to example 1 of the present embodiment will be described below. Although, as mentioned earlier, IDs that are formed with 1st IDs and 2nd IDs are used communications in small cells in example 1, this is by no means limiting. For example, 1st IDs and 2nd IDs may be used in communication in macro cells as well.

A small base station acquires the 1 st ID and the 2nd ID to use in the small cell which the subject station forms, from a macro base station, a higher station apparatus and so on, via a backhaul. However, this is by no means limiting, and one of the 1st ID and the 2nd ID, or both, may be configured in advance (for example, before the small base station is provided), may be reported via radio, or may be generated based on predetermined parameters and used. Note that a double-spread ID, in which a 1 st ID and a 2nd ID are double-spread, may be reported.

Meanwhile, the 2nd IDs are reported from each operator's macro cell and so on to user terminals through higher layer signaling (for example, RRC signaling) or in broadcast signals.

Meanwhile, the user terminals acquire the 1st IDs based on one of following acquiring methods 1 to 3.

According to acquiring method 1, the 1 st IDs are acquired based on small cells' detection signals (discovery signals). When a discovery signal sequence is generated in association with a 1st ID, given that, as mentioned earlier, this sequence is associated with a 1st ID and a 2nd ID, a user terminal can acquire the 1st ID by using the discovery signal that is received, with reference to the 2nd ID that is reported from the macro cell and so on.

Note that the discovery signals do not have to be associated with 1st IDs in sequences, and can be associated with 1st IDs in radio resources (for example, time, frequency and code resources, and/or the like), so that a structure to extract the 1st IDs based on these radio resources may be possible. According to acquiring method 1, a user terminal can acquire 1st IDs without connecting with macro base stations, so that interference between cells can be randomized sufficiently, while reducing the processing load.

Also, when there are multiple frequency bands which small cells can use (multi-carrier), a structure may be employed in which candidates of the 1st ID associated with the discovery signal are determined based on the carrier where the discovery signal is detected. For example, it is possible to determine candidates of the 1 st ID based on the carrier frequency band, the carrier number and so on, or a structure may be employed in which the 1st ID, not candidates thereof, is determined directly. Note that such associations may be reported from macro base stations or higher station apparatuses to user terminals through higher layer signaling (for example, RRC signaling) or in broadcast signals.

Acquiring method 2 is designed so that 1st IDs are reported from each operator's macro cell and so on, on a per user terminal basis, through higher layer signaling (for example, RRC signaling). By this means, 1st IDs are reported from macro base stations, as LTE Rel. 10 cell IDs and LTE Rel. 11 USIDs are. Consequently, it is possible to randomize interference between small cells sufficiently, while reducing the load of implementation pertaining to enhancement of cell IDs/USIDs. Note that it is equally possible to employ a structure to report 1st IDs and 2nd IDs at the same time, or employ a structure to report IDs that are calculated based on 1st IDs and 2nd IDs.

Acquiring method 3 is designed so that a plurality of candidates of 1 st IDs are reported from macro cells, on a per user terminal basis, and a user terminals detects the 1st ID assigned to the subject terminal from the candidates based on small cell detection signals (discovery signals). That is, it is possible to see the third acquiring method as a combination of acquiring method 1 and acquiring method 2 described above. By this means, compared to acquiring method 1, the discovery signals to be detected are limited, so that it is possible to reduce the processes in user terminals pertaining to cell search. For example, when a macro cell knows information about the location of a user terminal, the macro cell may report the 1 st ID of the cell covering the location of the user terminal (or near the user terminal) to the user terminal.

As described above, with the radio communication method according to example 1 of the present embodiment, downlink/uplink signals are generated using IDs that are formed based on 1st IDs, which are predetermined sequences used to specify cells, and 2nd IDs. By this means, it is possible to increase the number of ID sequences and reduce the rate of collisions of IDs in comparison to existing LTE systems (LTE Rel. 10/11). Also, by employing a structure to use different 2nd IDs for every operator that manages small cells, it is possible to even further prevent the interference of small cell IDs between operators. Consequently, it is possible to execute randomization between small cells more adequately, and prevent the decrease of overall system performance.

(Example 2)

A radio communication method according to an example 2 of the present embodiment will be described next. With the radio communication method according to example 2, small cell discovery signals are assigned to different radio resources per operator (for example, time, frequency and code resources, and so on). To be more specific, the radio resources to allocate are changed in accordance with predetermined parameters or sequences (for example, 2nd IDs according to example 1) which vary per operator. Note that, although it is preferable to assign these discovery signals so that the radio resources become orthogonal between operators, this is by no means limiting as long as the discovery signals are assigned to radio resources that are different at least in part. That is, a structure may be employed in which the radio resources partly overlap between operators.

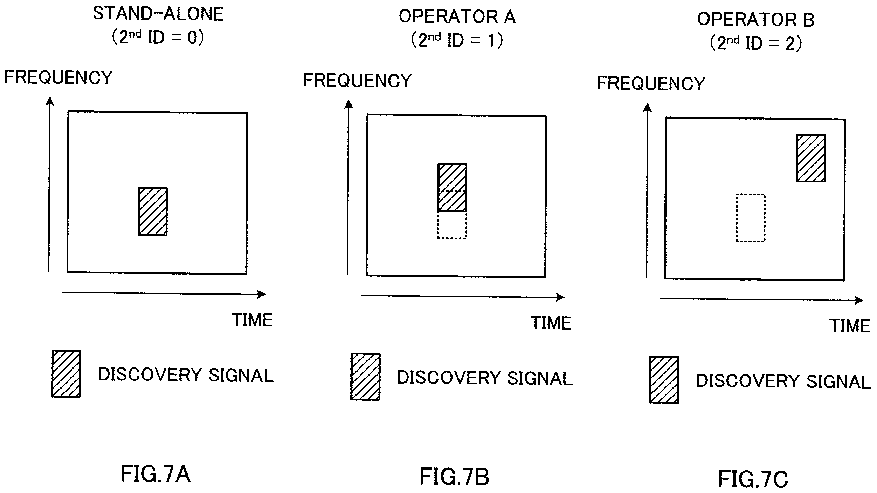

FIGs. 7 provide diagrams to show examples of radio resources where discovery signals are assigned, according to example 2 of the present embodiment. In each drawing, the horizontal axis is the time axis, and the vertical axis is the frequency axis. FIG. 7A, FIG. 7B and FIG. 7C show the assignments of discovery signals in a stand-alone small cell (2nd ID=0), the small cell of operator A (2nd ID=1) and the small cell of operator B (2nd ID=2).

Referring to FIGs. 7, the discovery signal of operator A of FIG. 7 B is shifted in the frequency direction and arranged, with respect to the discovery signal of the stand-alone cell of FIG. 7A. Also, the discovery signal of operator B of FIG. 7C is shifted in the frequency direction and the time direction and arranged.

In example 2, instead of changing the frequency/time resources, or while changing the frequency/time resources, it is also possible to apply scrambling to discovery signals based on predetermined parameters or sequences, and change the code resources. Note that such changes to radio resources are preferably designed so that frequency resources are shifted preferentially over time resources.

Also, instead of changing the radio resources, or while changing the radio resources, it is equally possible to change discovery signal sequences based on predetermined parameters or sequences. For example, when changing sequences based on 2nd IDs, sequences are generated based on the 1 st IDs and 2nd IDs of example 1.

As described above, with the radio communication method according example 2 of the present embodiment, the radio resources and/or sequences to which the discovery signals are assigned are changed based on predetermined parameters or sequences that are configured to vary per operator (for example, the 2nd IDs of example 1). By this means, user terminals can avoid detecting the small cells of unsubscribed operators, and reduce the amount of processing. Consequently, it is possible to save the power consumption in user terminals, and prevent the decrease of overall system performance.

Also, by using example 1 and example 2 of the present embodiment together, each operator can adequately prevent the decrease of overall system performance, and effectively realize traffic offloading from macro cells to small cells.

Note that, although example 2 has been described above such that the radio resources where discovery signals are allocated are made different based on 2nd IDs, this is by no means limiting. For example, the radio resources for discovery signals may be changed based on predetermined values that are designated per small cell (the amount of shifts in frequency resources, time resources, and so on). In this case, macro base stations or small base stations can perform listening (for example, quality measurements) with respect to radio resources in unlicensed bands where the small cells are assigned, so that the above-noted predetermined values can be determined to avoid the radio resources that are determined to be in use by other operators.

The above predetermined values, designed on a per small cell basis, may be reported from macro base stations to user terminals through higher layer signaling (RRC signaling, for example), or may be reported in broadcast signals. Also, it is equally possible to re-use the cell IDs/USIDs of existing LTE systems (LTE Rel. 10/11) as IDs.

(Variation)

Small base stations according to the present embodiment are structured to measure interference power in unlicensed bands, and decide whether or not discovery signals and/or data signals (for example, user data signals that are transmitted in the PDSCH) can be transmitted depending on interference power measurement results. For example, a structure may be employed here in which, when an interference power measurement result exceeds a predetermined threshold, the transmission of discovery signals and/or data signals is stopped.

Although the predetermined threshold may be acquired from a macro base station and so on via a backhaul, this is by no means limiting, and may be configured in advance, may be reported via radio, or may be generated based on predetermined parameters and used. Also, this threshold may be reported from a macro base station and/or the like, to user terminals, through higher layer signaling (for example, RRC signaling).

Note that the small base stations of the present embodiment may be structured to measure interference power from signals transmitted from neighboring small cells, signals transmitted from user terminals such as SRSs, D2D (Device to Device) signals transmitted from user terminals, and so on. Here, the D2D signals refer to all, or combinations of part of, the signals that are transmitted and received in D2D, including D2D discovery, D2D synchronization, D2D communication (inter-terminal communication, D2D communication) signals.

Also, the above-noted threshold for deciding whether or not transmission can be carried out based on interference measurement results may be made different between discovery signals and data signals. In this case, separate threshold maybe reported from macro cells, or it may be equally possible to report one threshold and a value to represent the difference between the thresholds.

Furthermore, the averaging duration of the above-noted interference measurements (the duration of measurements) for deciding whether or not transmission can be made may be different between discovery signals and data signals. In this case, separate averaging durations may be reported from macro cells, or it may be equally possible to report one averaging duration and a value to represent the difference from that averaging duration. Note that a structure is preferable here in which the averaging duration of discovery signal interference measurements is long in comparison to the averaging duration of data signal interference measurements.

Also, when there are multiple frequency bands which small cells can use (multi-carrier), the small base stations according to the present embodiment may be configured to repeat the process of measuring interference before transmitting discovery signals and measuring the interference level based on other carries when the threshold is exceeded, and transmit the discovery signals and perform subsequent data communications by using carriers below the threshold.

Note that the above-described variation is not limited to the small base stations of the present embodiment, and is applicable to user terminals as well. For example, user terminals may be structured to measure interference power in unlicensed bands, and decide whether or not signals such as SRSs, D2D signals and so on can be transmitted based on interference power measurement results.

(Structure of Radio Communications System)

A radio communications system in accordance with the present embodiment will be described below in detail. In this radio communication system, the radio communication methods according to example 1, example 2 and the variation described above are employed.

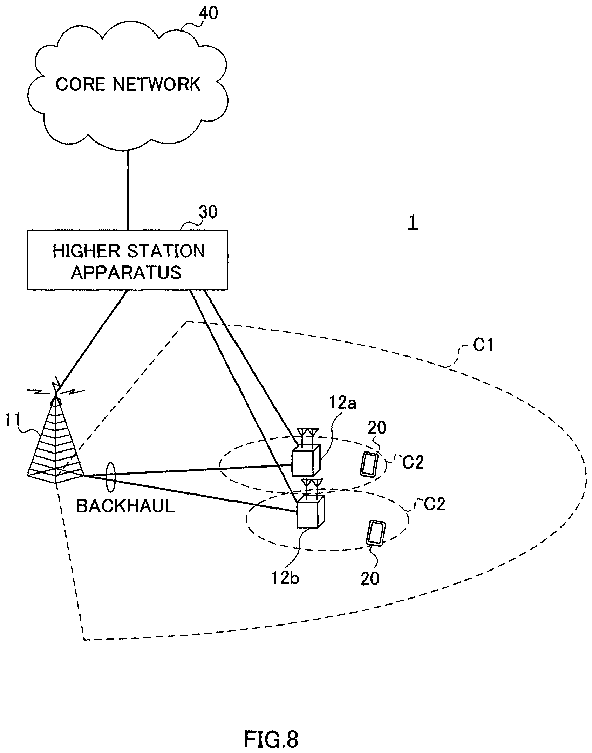

FIG. 8 is a schematic diagram to show an example of a radio communications system according to the present embodiment. As shown in FIG. 8, the radio communications system 1 includes a macro base station 11, which forms a macro cell C1, and small base stations 12a and 12b, which are placed within the macro cell C1 and which form small cells C2 that are narrower than the macro cell C1.

Also, user terminals 20 are placed in the macro cell C1 and in each small cell C2. Note that the numbers of macro cells C1 (macro base stations 11), small cells C2 (small base stations 12) and user terminals 20 are not limited to those shown in FIG. 8.

The user terminals 20 are configured to be able to perform radio communication with the macro base station 11 and/or the small base stations 12. Furthermore, the user terminals 20 are capable of communicating with a plurality of small base stations 12 by bundling the component carriers used in each small cell C2 (CA (Carrier Aggregation)/DC (Dual Connectivity)). Also, the user terminals 20 can bundle the component carriers that are respectively used in the macro cell C1 and the small cells C2, and communicate with the macro base station 1 and the small base stations 12.

Also, the user terminals 20 may communicate with a plurality of macro base stations 11 by bundling the component carriers used in each macro cell C1.

Communication between the user terminals 20 and the macro base station 11 is carried out using a carrier of a licensed band (for example, 2 GHz). On the other hand, communication between the user terminals 20 and the small base stations 12 is carried out using a carrier of an unlicensed band (for example, 3.5 GHz). Note that the frequency band of the licensed band may be higher or lower than the frequency band of the unlicensed band.

Also, the macro base station 11 and each small base station 12 may be connected via a channel of relatively low speed such as the X2 interface (non-ideal backhaul), may be connected via a channel of relatively high speed (low delay) such as optical fiber (ideal backhaul),or may be connected via radio. Also, the small base stations 12 may be connected using the X2 interface, optical fiber, radio connection and so on.

The macro base station 11 and the small base stations 12 are each connected to a higher station apparatus 30, and are connected to a core network 40 via the higher station apparatus 30. Note that the higher station apparatus 30 may be, for example, an access gateway apparatus, a radio network controller (RNC), a mobility management entity (MME) and so on, but is by no means limited to these.

Note that the macro base station 11 is a radio base station having a relatively wide coverage, and may be referred to as an "eNodeB (eNB)," a "radio base station," a "transmission point" and so on. The small base stations 12 are radio base stations that have local coverages, and may be referred to as "RRHs (Remote Radio Heads)," "pico base stations," "femto base stations," "home eNodeBs," "transmission points," "eNodeBs (eNBs)" and so on. The user terminals 20 are terminals to support various communication schemes such as LTE, LTE-A and so on, and may include both mobile communication terminals and stationary communication terminals.

Also, in the radio communications system 1, a physical downlink shared channel (PDSCH), which is used by each user terminal 20 on a shared basis, a physical downlink control channel (PDCCH), an enhanced physical downlink control channel (EPDCCH), a PCFICH, a PHICH, a broadcast channel (PBCH) and so on are used as downlink communication channels. User data and higher layer control information are communicated by the PDSCH. Downlink control information (DCI) is communicated by the PDCCH and the EPDCCH.

Also, in the radio communications system 1, a physical uplink shared channel (PUSCH), which is used by each user terminal 20 on a shared basis, a physical uplink control channel (PUCCH), a physical random access channel (PRACH) and so on are used as uplink communication channels. User data and higher layer control information are communicated by the PUSCH. Also, downlink radio quality information (CQI: Channel Quality Indicator), delivery acknowledgment signals (ACK/NACK) and so on are communicated by the PUCCH.

Also, in the radio communications system 1, terminal-specific reference signals (also referred to as "UE-specific reference signals," "DM-RSs" (DeModulation-Reference Signals) and so on) that are associated with the PDSCH, and demodulation reference signals (DM-RSs) that are associated with the EPDCCH, channel state measurement reference signals (CSI-RSs), small cell C2 detection signals (also referred to as "DSs" (Discovery Signals)) and so on are used as downlink reference signals. Also, in the radio communications system 1, primary synchronization signals (PSSs), secondary synchronization signals (SSSs) and so on are used as downlink synchronization signals.

Note that the discovery signals have only to be signals that can be used to detect small cells (detection signals that are required in cell search), and may be signals used in existing LTE systems such as synchronization signals (PSS/SSS), cell cell-specific reference signals (CRSs) and so on, or may be signals that are configured new for LTE-U.

Also, in the radio communications system 1, as uplink reference signals, demodulation reference signals (DM-RSs) for the PUSCH or the PUCCH, SRSs (Sounding Reference Signals) and so on are used.

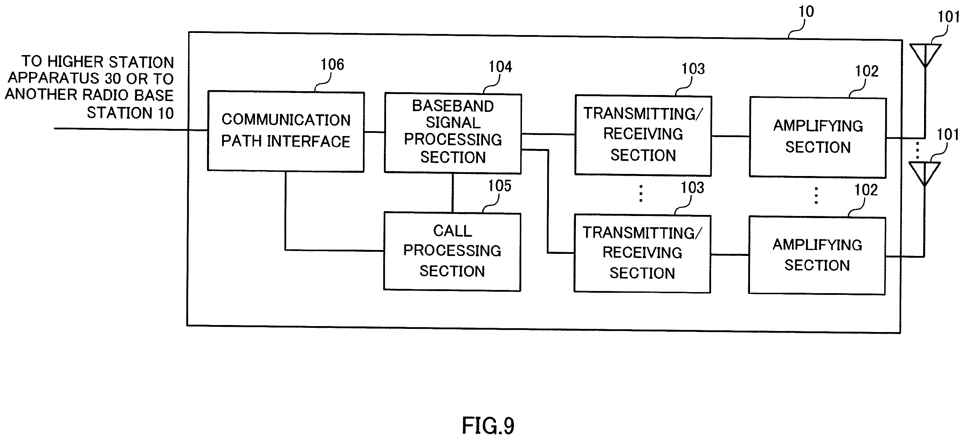

Hereinafter, the macro base station 11 and the small base stations 12 will be collectively referred to as "radio base station 10," unless specified otherwise. FIG. 9 is a diagram to explain an example of an overall structure of a radio base station 10 according to the present embodiment. The radio base station 10 has a plurality of transmitting/receiving antennas 101 for MIMO communication, amplifying sections 102, transmitting/receiving sections 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control signals, reference signals, synchronization signals, broadcast signals and so on are also subjected to transmission processes such as channel coding and an inverse fast Fourier transform, and forwarded to each transmitting/receiving section 103.

Each transmitting/receiving section 103 converts the downlink signals, pre-coded and output from the baseband signal processing section 104 on a per antenna basis, into a radio frequency band. The transmitting/receiving section 103 constitutes the transmission section of the radio base station according to the present embodiment. The amplifying sections 102 amplify the radio frequency signals having been subjected to frequency conversion, and transmit the signals through the transmitting/receiving antennas 101.

On the other hand, as for uplink signals, radio frequency signals that are received in the transmitting/receiving antennas 101 are each amplified in the amplifying sections 102, converted into baseband signals through frequency conversion in each transmitting/receiving section 103, and input into the baseband signal processing section 104.

In the baseband signal processing section 104, user data that is included in the baseband signals that are input is subjected to an inverse fast Fourier transform (IFFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

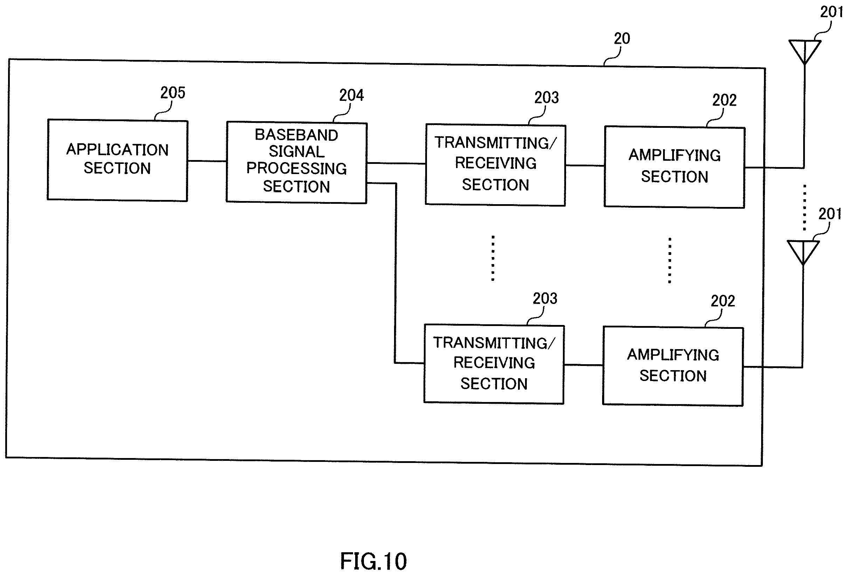

FIG. 10 is a diagram to show an example of an overall structure of a user terminal 20 according to the present embodiment. The user terminal 20 has a plurality of transmitting/receiving antennas 201 for MIMO communication, amplifying sections 202, transmitting/receiving sections 203, a baseband signal processing section 204 and an application section 205.

As for downlink signals, radio frequency signals that are received in a plurality of transmitting/receiving antennas 201 are each amplified in the amplifying sections 202, subjected to frequency conversion in the transmitting/receiving sections 203, and input in the baseband signal processing section 204. In the baseband signal processing section 204, an FFT process, error correction decoding, a retransmission control receiving process and so on are performed. The user data that is included in the downlink signals is forwarded to the application section 205. The application section 205 performs processes related to higher layers above the physical layer and the MAC layer. Also, in the downlink data, broadcast information is also forwarded to the application section 205.

Meanwhile, uplink user data is input from the application section 205 to the baseband signal processing section 204. In the baseband signal processing section 204, MAC retransmission control (for example, HARQ transmission process), channel coding, precoding, a discrete Fourier transform (DFT) process, an IFFT process and so on are performed, and the result is forwarded to each transmitting/receiving section 203. The baseband signal that is output from the baseband signal processing section 204 is converted into a radio frequency band in the transmitting/receiving sections 203. The transmitting/receiving sections 203 constitute the transmission section of the user terminal according to the present embodiment. After that, the amplifying sections 202 amplify the radio frequency signal having been subjected to frequency conversion, and transmit the resulting signal from the transmitting/receiving antennas 201.

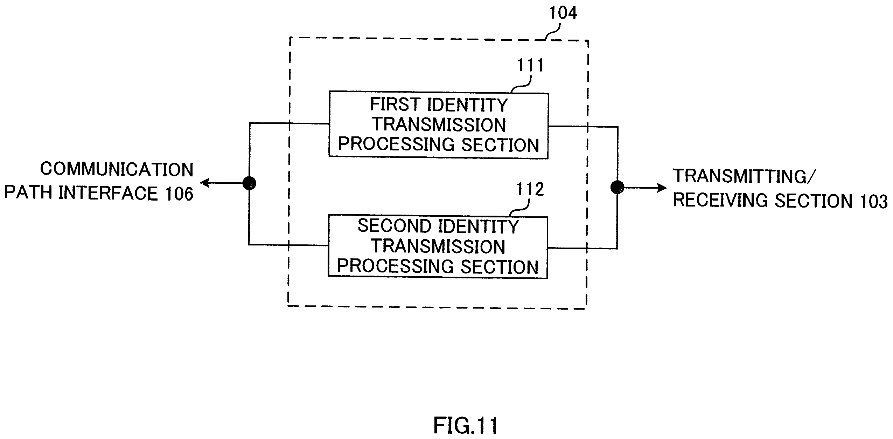

Next, functional structures of a macro base station 11, a small base station 12 and a user terminal 20 will be described in detail with reference to FIG. 11 to FIG. 13.

FIG. 11 is a diagram to explain an example of a functional structure of a macro base station 11 according to the present embodiment. As shown in FIG. 11, the macro base station 11 has a first identity transmission processing section 111 and a second identity transmission processing section 1112. The following functional structure is formed with the baseband signal processing section 104 provided in the macro base station 11.

The first identity transmission processing section 111 performs the transmission processes (for example, modulation, coding, etc.) of a signal containing information related to the first identity (1st ID). To be more specific, the first identity transmission processing section 111 executes processes so that the signal is transmitted to the small base station 12 via the communication path interface 106, and/or transmitted to the user terminal 20 via the transmitting/receiving sections 103.

The first identity transmission processing section 111 executes processes so that the 1st ID is reported to the small base station 12 via the communication path interface 106.

Also, the first identity transmission processing section 111 may execute processes so that the 1st ID is reported to the user terminal 20 through higher layer signaling (for example, RRC signaling) (acquiring method 2 of example 1).

Also, the first identity transmission processing section 111 may execute processes so that a plurality of candidate 1st IDs are reported to the user terminal 20 through higher layer signaling (for example, RRC signaling) (acquiring method 3 of example 1).

Note that, when the cell detection signals that are transmitted from the small base station 12 (discovery signals, synchronization signals, CRSs and so on) are generated in association with 1st IDs (acquiring method 1 of example 1), the first identity transmission processing section 111 can be structured to skip the process of transmitting the signal including 1st ID-related information to the user terminal 20 via the transmitting/receiving sections 103.

The second identity transmission processing section 112 performs transmission processes (for example, modulation, coding, etc.) of a signal including information related to the second identity (2nd ID). To be more specific, the second identity transmission processing section 112 executes processes so that the signal is reported to the small base station 12 via the communication path interface 106, and/or transmitted to the user terminal 20 via the transmitting/receiving sections 103.

The second identity transmission processing section 112 executes processes so that 2nd ID is reported to the small base stations 12 via the communication path interface 106.

Also, the second identity transmission processing section 112 executes processes so that the 2nd ID is reported to the user terminals 20 through higher layer signaling (for example, RRC signaling) or in broadcast signals (example 1).

Note that a structure may be employed here in which the 2nd IDs to apply to small cells are reported from the core network 40 or the higher station apparatus 30 to each macro base station 11 via the communication path interface 106, or may be configured in the macro base stations 11 in advance. Note that it is preferable to apply different 2nd IDs on a per operator basis.

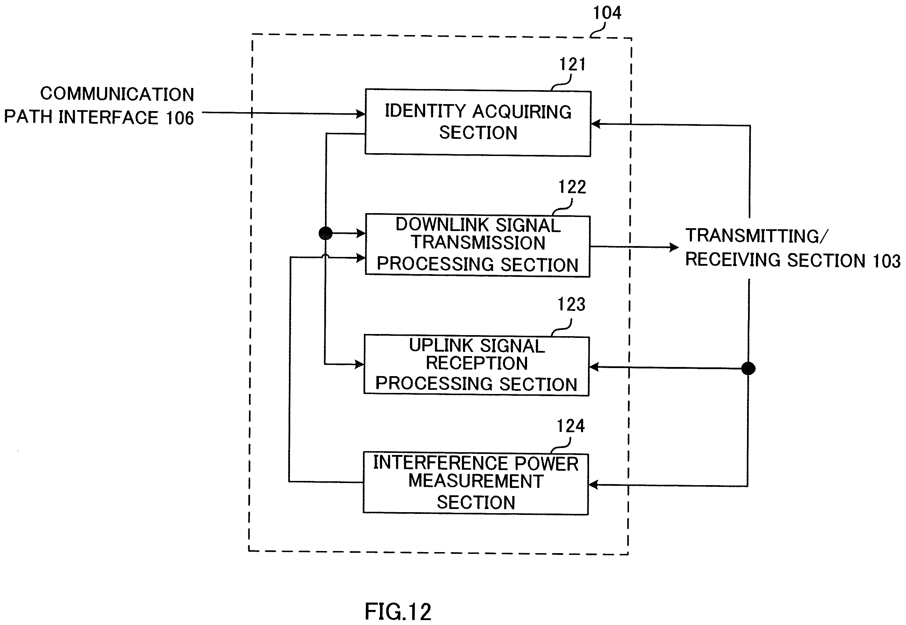

FIG. 12 is a diagram to show an example of a functional structure of a small base station 12 according to the present embodiment. As shown in FIG. 12, the small base station 12 has an identity acquiring section 121, a downlink signal transmission processing section 122, an uplink signal reception processing section 123 and an interference power measurement section 124. Note that the following functional structure is formed with the baseband signal processing section 104 provided in the small base station 12 and so on.

The identity acquiring section 121 acquires the identities (IDs) to use in downlink signal transmission processes/uplink signal receiving processes. To be more specific, the identity acquiring section 121 may acquire the 1st ID and the 2nd ID, and acquire an ID by applying predetermined manipulation to the 1 st ID and the 2nd ID. Furthermore, an ID that is formed with the 1 st ID and the 2nd ID itself may be acquired.

The identity acquiring section 121 may acquire the 1st ID and the 2nd ID (or an ID itself) from the macro base station 11 or the higher station apparatus 30 via the communication path interface 106. Furthermore, one or both of the 1 st ID and the 2nd ID may be configured in advance (for example, when the small base station 12 is installed), may be reported in radio signals which are received in the transmitting/receiving section 103, or may be generated based on predetermined parameters.

The downlink signal transmission processing section 122 performs downlink signal transmission processes (for example, scrambling, mapping, modulation, coding, etc.) by using the ID that is acquired in the identity acquiring section 121. The downlink signal transmission processing section 122 constitutes the generating section (which generates downlink signals) in radio base stations according to the present embodiment.

To be more specific, the downlink signal transmission processing section 122 may initialize the pseudo random sequence (scrambling sequence) based on the ID and generate (scramble) downlink signals based on the initialized pseudo random sequence. As mentioned earlier, the downlink signals are, for example, CSI-RSs, EPDCCH transmitting signals, the DM-RS for the EPDCCH, the DM-RS for the PDSCH, PDSCH transmitting signals and so on, but are by no means limited to these.

The uplink signal reception processing section 123 performs uplink signal receiving processes (for example, descrambling, demapping, demodulation, decoding, etc.) by using the ID acquired in the identity acquiring section 121.

To be more specific, the uplink signal reception processing section 123 initializes the pseudo random sequence (scrambling sequence) based on the ID, and performs uplink signal receiving processes (descrambling) based on the initialized pseudo random sequence. As mentioned earlier, the uplink signals are, for example, the DM-RS for the PUSCH or the PUCCH, PUSCH transmitting signals, PUCCH transmitting signals, SRSs and so on, but are by no means limited to these.

The interference power measurement section 124 measures the interference power in unlicensed bands based on signals received from the transmitting/receiving section 103. When an interference power measurement result to exceed a predetermined threshold is acquired, the interference power measurement section 124 may output a control signal to the downlink signal transmission processing section 122 so as to stop the transmission of discovery signals and/or data signals. Note that, if such interference power measurement-based control is not used, the interference power measurement section 124 can be removed.

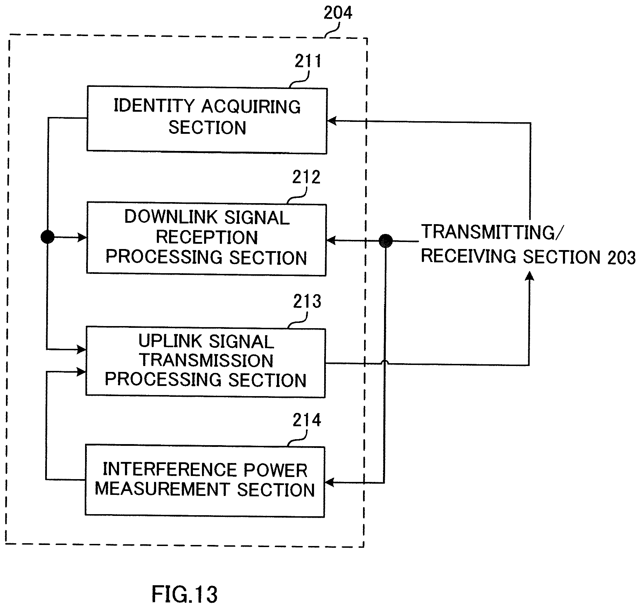

FIG. 13 is a diagram to show an example of a functional structure of a user terminal 20 according to the present embodiment. As shown in FIG. 13, the user terminal 20 has an identity acquiring section 211, a downlink signal reception processing section 212, an uplink signal transmission processing section 213 and an interference power measurement section 214. Note that the following functional structure is formed with, for example, the baseband signal processing section 204 provided in the user terminal 20.

The identity acquiring section 211 acquires the identity (ID) to use in the downlink signal receiving processes/uplink signal transmitting processes. The ID is formed with a 1 st ID and a 2nd ID. The identity acquiring section 211 acquires the 1 st ID and the 2nd ID by using received signals input from the transmitting/receiving section 203, and acquires the ID based on the 1 st ID and 2nd ID. Note that, when a received signal that is input from the transmitting/receiving section 203 includes an ID itself, the identity acquiring section 211 can acquire this ID directly. The identity acquiring section 211 outputs the acquired ID to the downlink signal reception processing section 212 and the uplink signal transmission processing section 213.

The identity acquiring section 211 can acquire 2nd IDs through higher layer signaling (for example, RRC signaling) or in broadcast signal transmitted from each operator's macro base station 11.

Also, when the cell detection signals (discovery signals, synchronization signals, CRSs and so on) transmitted from the small base stations 12 are generated in association with 1st IDs, the identity acquiring section 211 can acquire the 1st IDs from the received discovery signals (acquiring method of example 1). Note that, for example, discovery signal sequences, radio resources (for example, time, frequency and code resources) and so on may be associated with 1st IDs as well.

Also, when discovery signals are generated in association with 1st IDs and 2nd IDs, the identity acquiring section 211 can acquire the 1st IDs from the discovery signals based on 2nd IDs acquired from the macro base stations 11 (acquiring method 1 of example 2).

Also, a structure may be employed here in which, when there are multiple frequency bands which a small cell can use (multi-carrier), the identity acquiring section 211 determines candidates of the 1st ID associated with the discovery signal based on the carrier where the discovery signal is detected.

Also, the identity acquiring section 211 can acquire the 1 st ID from higher layer signaling (for example, RRC signaling) transmitted from each operator's macro base station 11 (acquiring method 2 of example 1).

Also, the identity acquiring section 211 can specify a plurality of 1st ID candidates based on higher layer signaling transmitted from each operator's macro base station (acquiring method 3 of example 1). In this case, based on the discovery signals received, the 1 st ID is selected and acquired from a plurality of 1st ID candidates.

The downlink signal reception processing section 212 performs downlink signal receiving processes (for example, descrambling, demapping, demodulation, decoding, etc.) by using the ID that is acquired in the identity acquiring section 211. To be more specific, the downlink signal reception processing section 212 initializes the pseudo random sequence (scrambling sequence) based on the ID, and performs downlink signal receiving processes (descrambling) based on the initialized pseudo random sequence. Also, the downlink signal reception processing section 212 may perform receiving processes for D2D signals as well.

The uplink signal transmission processing section 213 performs uplink signal transmitting processes (for example, scrambling, hopping, mapping to radio resources, modulation, coding, etc.) by using the ID that is acquired in the identity acquiring section 211. The uplink signal transmission processing section 213 constitutes the generating section (which generates uplink signals) in the user terminals of the present embodiment. To be more specific, the uplink signal transmission processing section 213 may initializes the pseudo random sequence (scrambling sequence) based on the ID, and generate (scrambles) uplink signals based on the initialized pseudo random sequence. Also, the uplink signal transmission processing section 213 may perform the transmission process of D2D signals.

The interference power measurement section 214 measures interference power in unlicensed bands based on signals received from the transmitting/receiving sections 203. When an interference power measurement result to exceed a predetermined threshold is acquired, the interference power measurement section 214 may output a control signal to the uplink signal transmission processing section 213 so as to stop the transmission of discovery signals and/or reference signals. Note that, if such interference power measurement-based control is not used, the interference power measurement section 214 can be removed.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of claims. Consequently, the description herein is only provided for the purpose of illustrating examples, and should by no means be construed to limit the present invention in any way.

This application is based on Japanese Patent Application No. 2014-019325, filed on February 4, 2014, including the specification, drawings and abstract, is incorporated herein by reference in its entirety.

**Claims**

1. A user terminal that, in a radio communications system in which a small cell that uses an unlicensed band is arranged to geographically overlap a macro cell that uses a licensed band, communicates in the macro cell and the small cell, the user terminal comprising:

   an identity acquiring section that acquires an identity that is formed based on a first identity, which is a predetermined sequence used to specify cells, and a second identity, by using a downlink signal transmitted from one of a macro base station that forms the macro cell and a small base station that forms the small cell;
   a generating section that generates an uplink signal using the identity; and
   a transmission section that transmits the uplink signal to the small base station.

2. The user terminal according to claim 1, wherein the second identity varies per mobile communications provider that manages the small cell.

3. The user terminal according to one of claim 1 and claim 2, wherein the first identity is a physical cell ID or a terminal-specific identity stipulated in an LTE system.

4. The user terminal according to one of claim 1 and claim 2, wherein the identity acquiring section acquires the second identity from higher layer signaling or a broadcast signal transmitted from the macro base station.

5. The user terminal according to one of claim 1 and claim 2, wherein the identity acquiring section acquires the first identity based on a cell detection signal transmitted from the small base station or higher layer signaling transmitted from the macro base station.

6. The user terminal according to one of claim 1 and claim 2, wherein the identity acquiring section determines candidates of the first identity based on higher layer signaling transmitted from the macro base station, and selects the first identity from the candidates based on a cell detection signal received from the small base station.

7. The user terminal according to one of claim 1 and claim 2, wherein a cell detection signal transmitted from the small base station is allocated to different radio resources depending on the second identity.

8. The user terminal according to one of claim 1 and claim 2, wherein a cell detection signal transmitted from the small base station is transmitted when interference power in the unlicensed band measured by the small base station is equal to or lower than a predetermined threshold.

9. A radio base station that, in a radio communications system in which a small cell that uses an unlicensed band is arranged to geographically overlap a macro cell that uses a licensed band, forms the small cell and communicates with a user terminal, the radio base station comprising:

   an identity acquiring section that acquires an identity that is formed based on a first identity, which is a predetermined sequence used to specify cells, and a second identity;
   a generating section that generates a downlink signal using the identity; and
   a transmission section that transmits the downlink signal to the user terminal.

10. A radio communication method for allowing a user terminal to communicate in a macro cell and small cell in a radio communications system in which the small cell that uses an unlicensed band is arranged to geographically overlap the macro cell that uses a licensed band, the radio communication method comprising the steps of:

   acquiring an identity that is formed based on a first identity, which is a predetermined sequence used to specify cells, and a second identity, by using a downlink signal transmitted from one of a macro base station that forms the macro cell and a small base station that forms the small cell;
   generating an uplink signal using the identity; and
   transmitting the uplink signal to the small base station.

FIG.1

FIG.2A

CA/DC MODE

LICENSED　　　　UNLICENSED

→ FREQUENCY

FIG.2B

SDL MODE

LICENSED　　　　UNLICENSED

→ FREQUENCY

FIG.2C

STAND-ALONE MODE

LICENSED　　　　UNLICENSED

→ FREQUENCY

F1: LICENSED BAND
(MANAGED UNDER OPERATOR A)

F2: UNLICENSED BAND
(MANAGED UNDER OPERATOR A)

F2: UNLICENSED BAND
(MANAGED UNDER OPERATOR EXCEPT
OPERATOR A/STAND-ALONE)

FIG.3

EP 3 104 634 A1

| 1st ID (504) | $\bigotimes$ | 2nd ID (X) |

FIG.4

OPERATOR A
$2^{nd}$ ID = 1-10

OPERATOR B
$2^{nd}$ ID = 11-15

OPERATOR C
$2^{nd}$ ID = 16

STAND-ALONE
$2^{nd}$ ID = 0

FIG.5

## FIG.6A

INDEPENDENT                    COMMON

CHANNEL/SIGNAL #A | 1st ID #A (504) | ⊗ | 2nd ID (X)

CHANNEL/SIGNAL #B | 1st ID #B (504) | ⊗ | 2nd ID (X)

CHANNEL/SIGNAL #C | 1st ID #C (504) | ⊗ | 2nd ID (X)

## FIG.6B

CHANNEL/SIGNAL #A | 1st ID (504) | ⊗ | 2nd ID (X)

CHANNEL/SIGNAL #B | 1st ID (504)

STAND-ALONE
(2nd ID = 0)

OPERATOR A
(2nd ID = 1)

OPERATOR B
(2nd ID = 2)

FREQUENCY

FREQUENCY

FREQUENCY

TIME

TIME

TIME

DISCOVERY SIGNAL

DISCOVERY SIGNAL

DISCOVERY SIGNAL

FIG.7A

FIG.7B

FIG.7C

EP 3 104 634 A1

FIG.8

FIG.9

FIG.10

104

111

FIRST IDENTITY
TRANSMISSION
PROCESSING SECTION

COMMUNICATION
PATH INTERFACE 106

TRANSMITTING/
RECEIVING SECTION 103

112

SECOND IDENTITY
TRANSMISSION
PROCESSING SECTION

FIG.11

FIG.12

204

211

IDENTITY ACQUIRING
SECTION

212

DOWNLINK SIGNAL
RECEPTION
PROCESSING SECTION

TRANSMITTING/
RECEIVING SECTION 203

213

UPLINK SIGNAL
TRANSMISSION
PROCESSING SECTION

214

INTERFERENCE POWER
MEASUREMENT SECTION

FIG.13

## INTERNATIONAL SEARCH REPORT

| | International application No. |
|---|---|
| | PCT/JP2015/052287 |

A.  CLASSIFICATION OF SUBJECT MATTER
*H04W8/26(2009.01)i, H04W16/32(2009.01)i, H04W72/04(2009.01)i*

According to International Patent Classification (IPC) or to both national classification and IPC

B.  FIELDS SEARCHED

Minimum documentation searched (classification system followed by classification symbols)
H04W8/26, H04W16/32, H04W72/04

Documentation searched other than minimum documentation to the extent that such documents are included in the fields searched
Jitsuyo Shinan Koho        1922-1996    Jitsuyo Shinan Toroku Koho   1996-2015
Kokai Jitsuyo Shinan Koho   1971-2015    Toroku Jitsuyo Shinan Koho   1994-2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | NTT DOCOMO, On Number of Cell IDs for Dense Small Cell Deployments[online], 3GPP TSG-RAN WG1#72b R1-131426, Internet <URL:http://www.3gpp.org/ftp/tsg_ran/WG1_RL1/TSGR1_72b/Docs/R1-131426.zip>, 2013.04.15 | 1-10 |
| A | NTT DOCOMO, Views on Uplink Enhancement for Dense Small Cell Operation[online], 3GPP TSG-RAN WG1#72b R1-131423, Internet <URL:http://www.3gpp.org/ftp/tsg_ran/WG1_RL1/TSGR1_72b/Docs/R1-131423.zip>, 2013.04.15 | 1-10 |

☐  Further documents are listed in the continuation of Box C.        ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 April 2015 (15.04.15) | 28 April 2015 (28.04.15) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (July 2009)

**EP 3 104 634 A1**

**Patent documents cited in the description**

- JP 2014019325 A

**Non-patent literature cited in the description**

- Evolved Universal Terrestrial Radio Access (E-UTRA); Further Advancements for E-UTRA Physical Layer Aspects. *3GPP TR 36.814*